# DEMANDE DE BREVET EUROPEEN

(11) **EP 2 821 271 A1**
(43) Date de publication de la demande: **07.01.2015**
(21) Numéro de dépôt: 13290155.4
(22) Date de dépôt: 04.07.2013
(51) Int. Cl.: B60K 7/00, B60L 7/10, F03G 1/00

(54) **Chargeur des batteries régénérateur à double ressorts-moteur et chargeur mono ressort-moteur implanté dans une roue de véhicule**

(71) Demandeur: Badanjak, Claude, F-93600 Aulnay sous Bois (FR)
(72) Inventeur: Badanjak, Claude, F-93600 Aulnay sous Bois (FR)

(57) **Abrégé**

Un appareil du type monté en liaison mobile avec un axe tournant du véhicule (1) est munis d'un réducteur des forces (3), des ressorts-moteur (5 et 11) logés dans des boîtiers (6 et 12) dotés des couronnes crantes (6bis et 12bis) et montés sur des moyeux (4 et 4bis); sur le même plan axiale, l'appareil est doté des engrenages intérieures (7 et 14) munis des ergots d'arrêt (7bis et 14bis), lesquels engrenages intérieures (7 et 14) collaborent avec des engrenages (8 et 13) afin d'entraîner en rotation un rotor (9), lequel en passant à proximité des premiers bobinages (10) induisent de l'électricité, régulé par un système de distribution électronique; le système de distribution électronique est doté d'un second bobinage (15), d'un noyau ferreux coulissant (16) et des billes (17) capables de se loger alternativement dans des cavités (18) des couronnes (6bis, 12bis), pendant que le bobinage (15) du distributeur électronique collabore en alternance avec des détecteurs de capacité des ressorts (19 et 19bis).

## Description

L'appareil en question est une amélioration, concernant la demande de brevet français N° FR2011/1001338 et le brevet PCT WO 2011/124776 lequel décrit le fonctionnement d'un appareil élémentaire, visant à résoudre le problème de l'autonomie des véhicules électriques, actuellement strictement dépendant des bornes EDF trop rares ou des prises électriques domestiques, nécessitant les temps de charges plutôt longues.

L'Invention en question est destinée à récupérer de l'énergie cinétique du véhicule, la stocker dans des ressorts-moteur de l'appareil puis a l'aide de l'alternateur recycler et entretenir la charge des batteries du véhicule électrique suffisante, en déplacement en marche avant, en accumulant de l'énergie, pouvant prolonger considérablement l'autonomie, puis assister au démarrage du véhicule, à faire fonctionner la climatisation, ainsi que d'autres consommateurs d'électricité.

L'appareil est monté de manière à être en liaison avec un axe tournant du véhicule électrique en mouvement(1), lequel met en rotation le second axe(2) doté d'un troisième axe hexagonale(2bis), d'un réducteur des forces(3), et par intermédiaire des moyeux (4 et 4bis) remontent en alternance les ressorts-moteur (5 et 11), commandés par des détecteurs de capacité des ressorts(19 et 19bis). Les ressorts-moteur (5 et 11) sont installes dans des boitiers (6 et 12), dotés des couronnes crantes (6bis et 12bis), lesquelles sont jouxtes des engrenages intérieures (7 et 14), équipés des ergots d'arrêt (7bis et 14bis), pour faciliter le remontage des ressorts-moteur (5 et 11). Lorsque l'un des ressorts est en action, des engrenages intérieures (7 ou 14) bridé par les ergots d'arrêt(7bis ou 14bis), mettant en rotation l'ensemble de rouages (8 ou 13), lesquels actionnent l'élément rotor(9) puis en collaborant avec les bobinages(10) induisent de l'électricité, acheminé par des conducteurs(20) vers les batteries du véhicule électrique. L'action alternative des ressorts est assurée par un distributeur électronique, composé d'un bobinage(15), un noyau en métal ferreux(16) des billes(17) lesquelles sont la possibilités en ce coinçant dans la cavité(18) d'arrêter la rotation des boitiers(6 ou 12) pour assurer le remontage des ressorts-moteur(5 et 11).

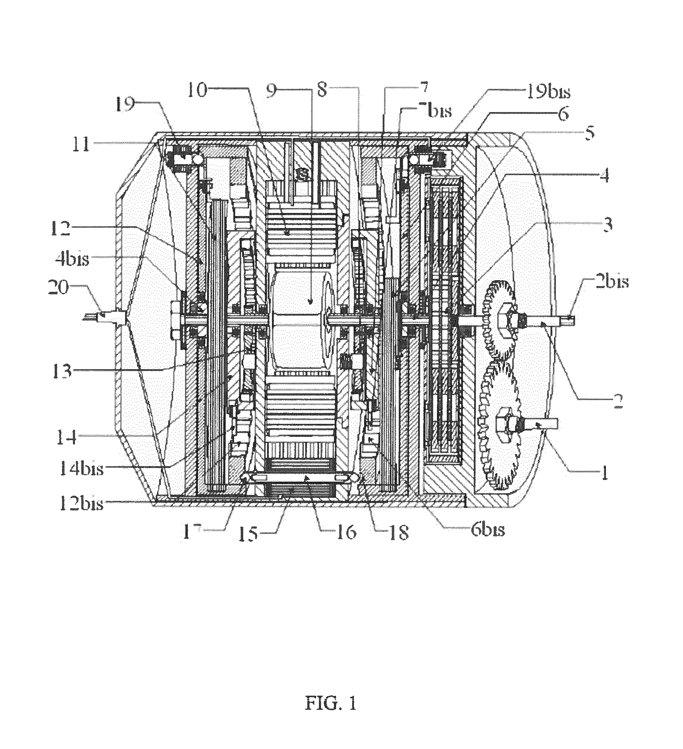

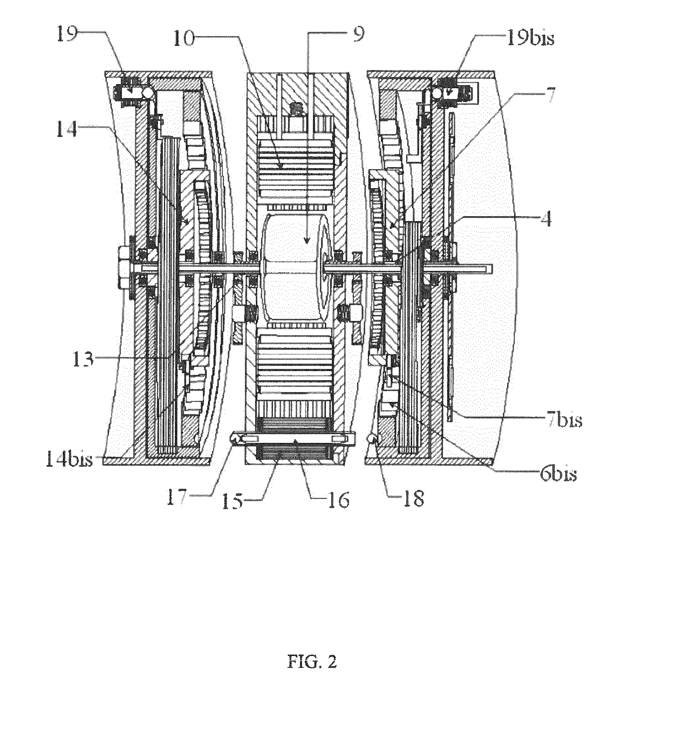

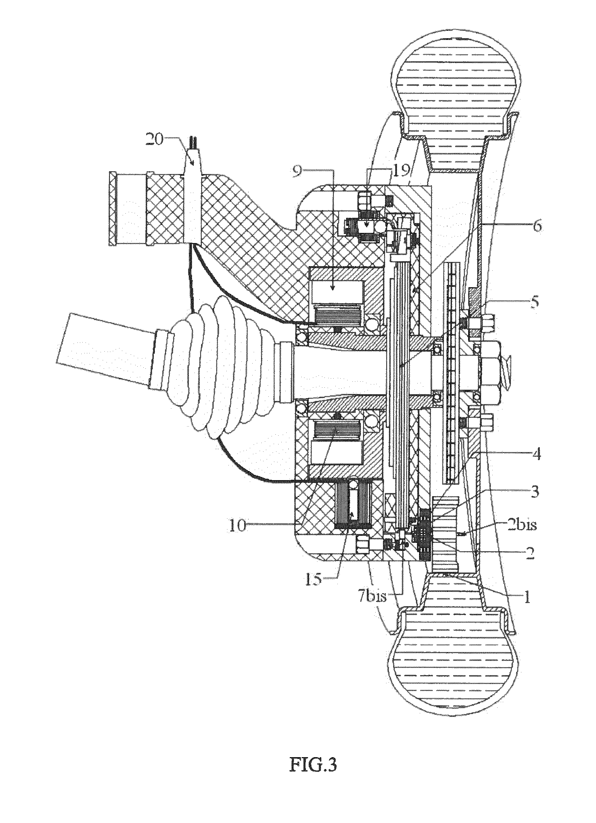

Il est envisageable selon la Figure 3, de réaliser une variante du même type d'appareil, transposé dans un ou plusieurs moyeux des roues d'un véhicule électrique.

## Revendications

1. L'appareil du type monté en liaison mobile entre un axe tournant du véhicule(1) et un second axe (2) percé de forme hexagonale et traversé d'un troisième axe hexagonale(2bis), et munis d'un réducteur des forces(3), des ressorts-moteur(5 et 11) logé dans des boîtiers(6 et 12), et dotés des couronnes crantes (6bis et 12 bis), montés sur des moyeux(4 et 4bis). Sur le même plan axiale, l'appareil est doté des engrenages intérieures(7 et 14) munis des ergots d'arrêt(7bis et 14bis), lesquels engrenages intérieures(7 et 14) collaborent avec des engrenages(8 et 13) afin d'entraîner en rotation un rotor(9), lequel en passant à proximité des bobinages(10) induisent de l'électricité, régulé par un système de distribution électronique doté d'un bobinage(15), d'un noyau ferreux coulissant(16) et des billes(17) capables de se loger dans des cavités(18), pendant que le bobinage(15) du distributeur électronique, collabore en alternance avec des détecteurs de capacité des ressorts(19 et 19bis).

2. L'appareil selon la revendication 1 **caractérisé en ce que** la majorité des éléments de l'appareil, soit transposables afin d'être installés dans un moyeu d'une roue d'un véhicule électrique.

3. L'appareil selon la revendication 1 **caractérisé en ce que** le second axe(2) est perforé de forme hexagonale.

4. L'apparcil selon la revendication 1 **caractérisé en ce que** le troisième axe hexagonale (2bis) est de la forme ajusté à l'axe(2), et constitue la liaison entre les moyeux (4 et 4bis).

5. L'appareil selon la revendication 1 **caractérisé en ce que** le troisième axe hexagonale (2bis) permet le remontage manuel des ressorts-moteur (5 et 11).

6. L'appareil selon la revendication 1 **caractérisé en ce que** le réducteur des forces(3) soit ajusté axialement au second axe (2), et est raccordé en liaison continu aux moyeux (4 et 4bis).

7. L'appareil selon la revendication 1 **caractérisé en ce que** les engrenages intérieures (7 et 14) collaborent avec les ergots d'arrêts (7bis et 14bis), afin de brider et assister au remontage des ressorts-moteur (5 et 11).

8. L'appareil selon la revendication 1 et quiconque autres des revendications précédentes, **caractérisé en ce que** les ressorts-moteur (5 et 11) soit logés dans les boîtiers (6 et 12) et débridés alternativement, afin d'entrainer en rotation le rotor(9).

9. L'appareil selon la revendication 1 **caractérisé en ce que** les ressorts-moteur (5 et 11) soient de grande capacité, capable d'entrainer en rotation le rotor(9).

10. L'appareil selon les revendications 1,2et3 **caractérisé en ce que** les ressorts-moteur (5 et 11) soient remontés et déchargés en déplacement en marche avant.

11. L'appareil selon la revendication 1 et quiconque autres des revendications précédentes, **caractérisé en ce que** les engrenages intérieures (7 et 14) coopèrent avec les ergots d'arrêt (7bis et 14bis), afin d'accumuler de l'énergie dans les ressorts-moteur (5 et 11).

12. L'appareil selon la revendication 1 et quelconque autres des revendications précédentes, **caractérisé en ce que** le système de distribution électronique(15) assure le fonctionnement alternatif des ressorts-moteur(5 et 11).

13. L'appareil selon la revendication 1 et quelconque des autres revendications précédentes, **caractérisé en ce que** les détecteurs de capacité des ressorts (19 et 19bis) commandent successivement la mise en fonctions du bobinage(15) du système de distribution électronique.

## Revendications modifiées

### Revendications modifiées conformément à la règle 137(2) CBE.

1. L'appareil du type monté en liaison mobile avec un axe tournant du véhicule(1) recordé aux rouages de transmission (1 bis) et un second axe (2) percé de forme hexagonale et traversé d'une tige hexagonale(2bis), et munis d'un réducteur des forces (3), des ressorts-moteur (5 et 11), montés en liaison fixe sur des moyeux (4 et 4bis), équipés des roulements anti-retour (RAR), logé dans des boîtiers (6 et 12), et dotés des couronnes crantes (6 bis et 12 bis). Sur le même plan axiale, l'appareil est doté des engrenages intérieures (7 et 14) munis des ergots d'arrêt (7bis et 14bis), lesquels engrenages intérieures (7 et 14) collaborent avec des engrenages (8 et 13) afin d'entraîner en rotation un rotor(9), lequel en passant à proximité des bobinages(10) induit de l'électricité, régulé par un système de distribution électronique doté d'un bobinage(15), d'un noyau ferreux coulissant(16) et des billes(17) capables de se loger dans des cavités(18), pendant que le bobinage(15) du distributeur électronique, collabore en alternance avec des détecteurs de capacité des ressorts(19 et 19 bis).

2. L'appareil selon la revendication 1 **caractérisé en ce que** la majorité des éléments de l'appareil, soit transposables afin d'être installés dans un moyeu d'une roue d'un véhicule électrique.

3. L'appareil selon la revendication 1 **caractérisé en ce que** le second axe(2) est perforé axialement de forme hexagonale.

4. L'appareil selon la revendication 1 **caractérisé en ce que** la tige hexagonale (2bis), est de la forme de perçage ajusté à l'axe(2), et constitue la liaison entre les moyeux (4 et 4bis).

5. L'appareil selon la revendication 1 **caractérisé en ce que** la tige hexagonale (2bis) permet le remontage manuel des ressorts-moteur (5 et 11).

6. L'appareil selon la revendication 1 **caractérisé en ce que** le réducteur des forces(3) soit ajusté axialement au second axe (2), et est raccordé en liaison continu aux moyeux (4 et 4bis).

7. L'appareil selon la revendication 1 **caractérisé en ce que** les engrenages intérieures (7 et 14) collaborent avec les ergots d'arrêts (7bis et 14bis), afin de brider dans un sans, et assister au remontage des ressorts-moteur (5 et 11).

8. L'appareil selon la revendication 1 et quiconque autres des revendications précédentes, **caractérisé en ce que** les ressorts-moteur (5 et 11) soit logés dans les boîtiers (6 et 12) et débridés alternativement, afin d'entrainer en rotation le rotor (9).

9. L'appareil selon la revendication 1 **caractérisé en ce que** les ressorts-moteur (5 et 11) soient de grande capacité, capable d'entraîner en rotation le rotor (9).

10. L'appareil selon les revendications 1, 2 et 3 **caractérisé en ce que** les ressorts-moteur (5 et 11), soient capable d'être remontés et déchargés en déplacement en marche avant.

11. L'appareil selon la revendication 1 et quiconque autres des revendications précédentes, **caractérisé en ce que** les moyeux (4 et 4bis), soient axialement mobile dans un sans, par rapport aux ressorts-moteur (5 et 11) afin de permettre l'accumulation de l'énergie dans les ressorts-moteur (5 et 11).

12. L'appareil selon la revendication 1 et quelconque autres des revendications précédentes, **caractérisé en ce que** le système de distribution électronique(15) assure le fonctionnement alternatif des ressorts-moteur (5 et 11).

13. L'appareil selon la revendication 1 et quelconque des autres revendications précédentes, **caractérisé en ce que** les détecteurs de capacité des ressorts (19 et 19bis) commandent successivement la mise en fonctions du bobinage (15) du système de distribution électronique.
